# EUROPEAN PATENT SPECIFICATION

(11) **EP 3 376 912 B1**
(45) Date of publication and mention of the grant of the patent: **16.09.2020**
(21) Application number: 16822529.0
(22) Date of filing: 18.11.2016
(51) Int. Cl.: A47J 27/62, A47J 36/32, A47J 37/06, A47J 37/12

(54) **APPARATUS FOR COOKING FOOD AND CORRESPONDING COOKING METHOD**
VORRICHTUNG ZUM GAREN VON LEBENSMITTELN UND ENTSPRECHENDES GARVERFAHREN
APPAREIL DE CUISSON D'ALIMENTS ET PROCÉDÉ DE CUISSON CORRESPONDANT

(30) Priority: 19.11.2015 IT UB20155746
(43) Date of publication of application: 26.09.2018
(73) Proprietor: De' Longhi Appliances S.r.l. Con Unico Socio, 31100 Treviso (IT)
(72) Inventor: DE' LONGHI, Giuseppe, 31100 Treviso (IT); TREVISAN, Gianpaolo, 37036 San Martino Buon Albergo (IT); VAZZOLER, Alessio, 33170 Pordenone (IT)
(74) Representative: Petraz, Gilberto Luigi
(86) International application number: PCT/IB2016/056944
(87) International publication number: WO 2017/085671

(56) References cited:
- EP-A1- 1 974 637
- WO-A1-2015/128759
- US-A- 5 808 280
- US-B1- 6 274 847

## Description

### FIELD OF THE INVENTION

The present invention concerns an apparatus for cooking food and a corresponding cooking method, of the type using heating elements of the electric type.

The invention is applied in particular, if not exclusively, to autonomous cooking apparatuses such as deep fryers that cook the food dry or immersed, or similar or analogous devices.

### BACKGROUND OF THE INVENTION

It is known to market and sell apparatuses for cooking food, equipped with heating elements, for example the electric type, used for cooking food by heat conduction.

The sources that feed the heating elements are controlled and managed by suitable known means.

Usually, this type of apparatus for cooking food is used to supply a container, inside which the food to be heated or cooked is disposed, with a desired temperature so as to heat and/or cook the food present therein. The container can contain a temperature mediator such as water, oil or other.

Types of apparatus for cooking food are known, intended for use as fryers or suchlike, which also comprise a lid to which heating elements and/or ventilation means are associated, driven by a drive member to direct the heat generated toward the food. Furthermore, such apparatuses can also comprise mixing elements, selectively drivable by a drive member to mix the food in the container or reduce it to small pieces. The mixing elements can also be integrated with and/or replaced by other tools such as blades, shredders or suchlike.

It is known that there are apparatuses for cooking food that comprise a casing, defining their external structure, inside which containers can be inserted, limited in shape and/or size so as not to interfere with the casing and/or the lid.

It is also known that in apparatuses for cooking food of this type, it is not possible to easily vary the size, in particular the base size, of the containers without causing an incorrect heating of the container and also an ineffective collaboration between the mixing elements, the lid and the walls of the container for cooking the food.

Known solutions generally allow to adjust the electric power and hence the heat energy generated by the heating elements, but have the substantial problem that they do not allow a spatial regulation of where to supply said energy. In other words, if the container has its surface to be heated not coherent with the heating surface of the apparatus, it is only possible to modify uniformly the intensity of the heating generated by the apparatus but it is not possible to choose different points of the zone of the surface to be heated.

This certainly entails a waste of heat energy if the container used occupies a surface smaller than the surface heated by the heating elements, and also causes a non-optimal and difficult cooking.

US-A-4731251 describes an apparatus for cooking food comprising a base, a first heating unit associated with the base, a lid and a second heating unit in correspondence with the lid. The apparatus also comprises a container to contain the food and selectively associable with the base.

US-A-2014/242227 describes a grill type apparatus for cooking food, comprising an external structure configured to house a food container, and a heating unit disposed above the container and comprising an internal heater and an external heater.

US-B-6274847 discloses an apparatus according to the preamble of independent claim 1.

Apparatuses are also known for cooking food that comprise heating elements, for example induction systems, which include intrinsic aptitude and capacity to self-regulate spatially the heated zone according to the size of the container, but in order to function need in any case to be fed with energy in their entirety, thus causing in any case a waste of energy.

These solutions therefore do not allow to save energy, or to guarantee an effective and uniform cooking, not even heating a surface smaller than the nominal one.

The main disadvantage in using this type of heating element is that it is impossible to save energy even if only a given part of it is actively used.

As we said, known cooking apparatuses do not allow to easily vary the format, in particular of the base surface of the containers, except by causing an inadequate heating.

Another disadvantage of changing container format is the possible ineffective collaboration, with regard to their size, with mixing elements and/or other elements of the apparatus for cooking food, such as the lid and the casing.

There is therefore a need to perfect an apparatus for cooking food and corresponding working method which can overcome at least one of the disadvantages of the state of the art.

In particular, one purpose of the present invention is to obtain an apparatus for cooking food, and the corresponding method, which allow to supply heat energy in direct correlation to the amplitude of the base surface of the container, thus avoiding waste and/or danger for the user and obtaining an improved cooking.

It is therefore a purpose of the present invention to allow to modify the heating surface generated by the heating elements as a function of the sizes and/or point position of the at least one container used for cooking.

Another purpose of the present invention is to allow to replace the format and size of the container so as to obtain an optimal collaboration between the mixing element and/or other tools, for example shredders/mincers and the container.

Moreover, another purpose of the present invention is to obtain an apparatus for cooking food that allows to change the format of the container simply and easily without causing mechanical and functional interferences with the other elements of the apparatus, and guarantee an optimum cooking of the food.

Another purpose of the present invention is to obtain an apparatus for cooking food that allows to reduce at least the costs of use compared with other known systems.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, an apparatus for cooking food according to claim 1 is provided, comprising a lid and at least a base that acts as a bearing structure, with which at least a first heating unit is associated. On the base it is possible to temporarily apply at least a removable container, with which the lid is associable at the top, cooperating with the base, with at least an open and a closed position.

According to the present invention, the first heating unit comprises heating elements of the electric type, of the induction type for example, or electric resistances, or even of another similar or comparable electric type.

The first heating unit comprises a plurality of electric heating elements configured to be selectively activated at least depending on the base sizes and/or position of the container/containers resting on the base, so as to take the container/containers to a desired temperature, to heat and/or cook the food contained therein.

According to the present invention, the first heating unit comprises sensitive elements configured to detect the position and/or the bulk of the at least one container.

The activation of only some, or all, of the heating elements that collaborate in the direct heating of the container/containers allows to not waste energy not used to heat the container/containers.

In accordance with variant embodiments of the invention, the heating elements to be activated or already activated are identified by the cooperation between the at least one container and the base, or alternatively they are chosen by a user.

The cooperation between the base and the lid always allows a suitable position of the container, also allowing to change its format and always guaranteeing an optimal cooking of the food, but avoiding interference between the container and other components of the apparatus for cooking food.

The change of format of the cooking container is particularly useful and advantageous if there is differentiated cooking, for example giving the possibility of using a container with a smaller base surface to carry out operations such as shredding or mincing, after inserting a suitable tool and adjusting the revolutions of a corresponding motor.

Moreover, inside the same cooking cycle, the container and the corresponding tool can be replaced to complete the cooking operation by means of mixing and/or stirring operations.

In accordance with the invention, the lid comprises a second heating unit. It is within the scope of the invention that the lid can have adaptation elements so that it can adapt to the change in format of the container/containers.

Another variant is to provide that the lid has means to change the air and/or means to cool the drive member of the ventilation means and/or means to detect the temperature in the container.

According to a variant, the apparatus for cooking food comprises means that make at least a mixing element present in the container rotate, and/or means to detect the temperature of the first heating unit and/or of the second heating unit, and/or control and command means, all of them being correctly coordinated by data processing means.

The apparatus for cooking food allows to optimize the collaboration between the at least one mixing element and the container, even in the case of a change of size and/or format of the latter.

It is within the scope of the invention to provide that the apparatus for cooking food has a data control and introduction console that cooperates with a control and command unit.

In accordance with one aspect of the present invention a cooking method is provided according to independent claim 8.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of a cooking apparatus, associated with a container, in accordance with embodiments described here;
- fig. 2 is a cross section along the center line of the cooking apparatus in fig. 1;
- figs. 3a-3d are schematic representations of some possible dispositions of the heating elements in accordance with embodiments described here.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

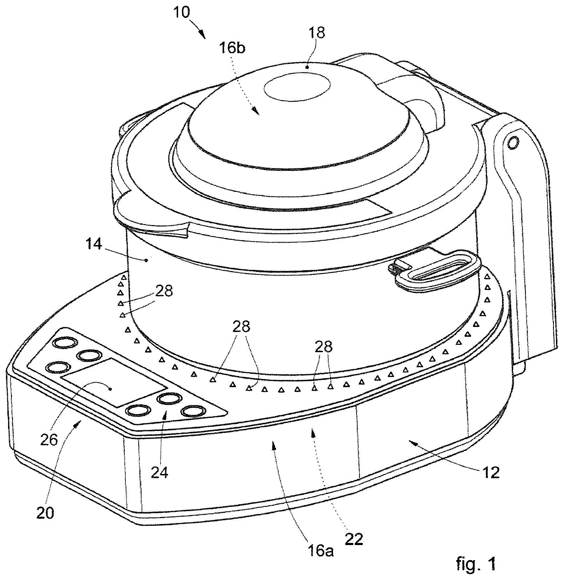

With reference to Fig 1, this is used to describe example embodiments of an apparatus for cooking food 10 with which at least a container 14 to contain the food is selectively associable.

The apparatus for cooking food 10 can be a deep fryer, by way of example a fryer suitable to cook food using a low quantity of temperature mediator such as water, oil or other.

The apparatus for cooking food 10 comprises a base 12 and at least a first heating unit 16a configured to take the container/containers 14, and consequently the food contained therein, to a desired temperature to heat and/or cook it.

Furthermore, the apparatus for cooking food 10 includes a lid 18 having at least an open position and a closed position.

The lid 18 comprises at least a packing 34 to ensure the seal of the lid 18 with the at least one container 14.

Packings 34 can be provided configured to collaborate as a function of the size and/or shape of the at least one container 14 used.

According to variant embodiments, the lid 18 can be movable to adapt to the sizes in height of the at least one container 14.

According to other variant embodiments, the lid 18 can be directly associated with and/or be part of the at least one container 14.

The apparatus for cooking food 10 can also comprise an external lining which, for ease of representation, is not shown in the attached drawings.

The first heating unit 16a is associated with the base 12, although it is not excluded that it can possibly be associated with other parts of the apparatus for cooking food 10.

Furthermore, the first heating unit 16a is configured to selectively heat the container/containers 14, supplying appropriate heat energy.

According to the invention the lid 18 comprises a second heating unit 16b.

Furthermore, the lid 18 comprises ventilation means 32 selectively made to function by a drive member M1 and cooperating with the second heating unit 16b.

According to the present invention, the apparatus for cooking food 10 is also suitable to heat more than one size and/or shape of container 14.

According to variant embodiments, the at least one container 14 can be made of heat-conductive material and/or material sensitive to magnetic fields.

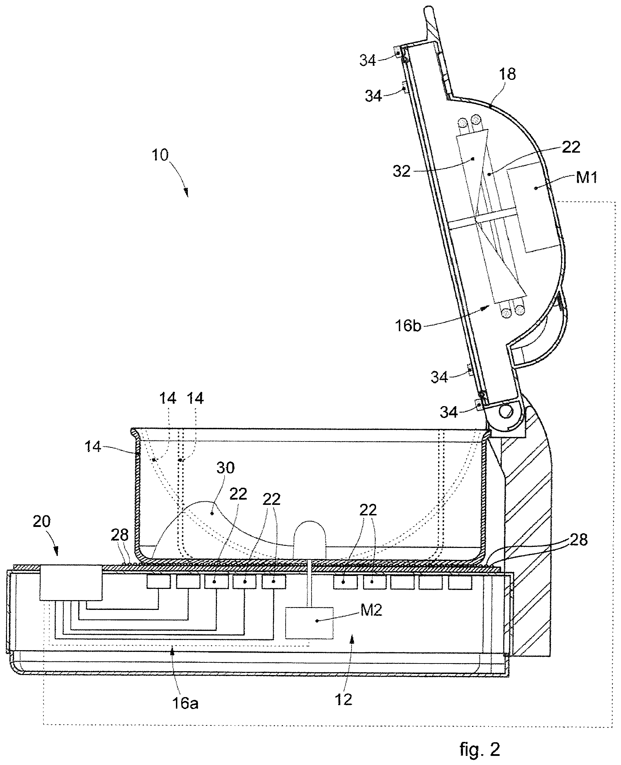

According to variant embodiments described using fig. 2, the apparatus for cooking food 10 is configured to be able to collaborate with a plurality of types of containers 14 and to heat them by supplying heat energy by means of at least the first heating unit 16a and/or the second heating unit 16b.

In addition, the apparatus for cooking food 10 can be configured to heat more than one container 14 simultaneously.

According to the present invention, the first heating unit 16a comprises a plurality of heating elements 22 configured to heat at least one container 14 at a time, selectively activating depending on the size of the at least one container 14 and/or the position assumed by the container/containers 14 on the base 12.

The second heating unit 16b also comprises at least one heating element 22.

The heating elements 22 of the second heating unit 16b can be the same type as those provided for the first heating unit 16a.

According to a variant embodiment, the heating elements 22 can be configured to activate automatically when the presence of the container/containers 14 is detected.

According to variant embodiments, the heating elements 22 to be activated can also be selected by an operator as desired.

According to another variant, the heating elements 22 are configured to activate or be activated depending on the geometric shape of the container/containers 14.

By way of example, containers 14 can be used with a base having a circular or discoid shape, or polygonal or any other shape suitable for containing food.

Furthermore, the containers 14 can have substantially vertical walls, or flared walls, depending on the food to be contained and the type of cooking required.

According to the present invention, the heating elements 22 are the electric type and can for example be tubular electric resistances, or resistive bands, or resistive wires, or can be the inductive type, halogen, infrared, or similar or comparable elements, able to generate heat to convey to the at least one container 14.

According to variant embodiments, the disposition of the heating elements 22 can be concentric, matrix, reticulate, sectorial, point-by-point, or can be obtained in any other manner able to obtain heating zones that at least partly adapt to or reproduce the container 14 or at least some of several containers 14 simultaneously.

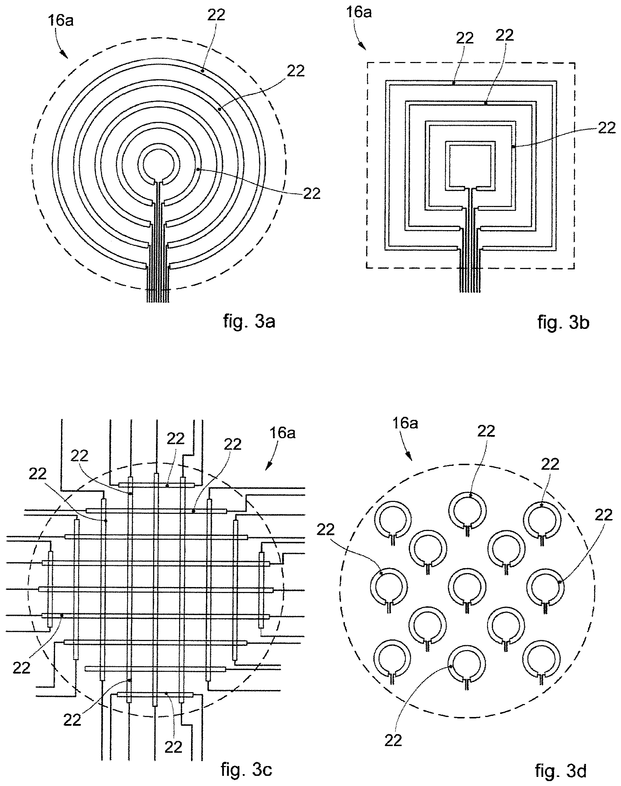

According to variant embodiments described using figs. 3a and 3b, the disposition of the heating elements 22 can be concentric, with heating elements 22 disposed so that their activation can be extended from the center toward the periphery as the sizes of the at least one container 14 associated with the base 12 increase, and retracts as they reduce. The configuration of the heating elements 22 can be the annular type (fig. 3a), lobed or polygonal, by way of example triangular, quadrangular (fig. 3b), pentagonal and so on, or also of another type.

According to variant embodiments described using fig. 3c, the disposition of the heating elements 22 can be reticular, with the heating elements 22 substantially linear, oriented transversely to each other, for example perpendicularly, so as to activate according to the position assumed by the at least one container 14 on the base 12.

According to variant embodiments described using fig. 3d, the disposition of the heating elements 22 can be the matrix type, or point-by-point, with heating elements 22 of the annular type, lobed or polygonal, by way of example triangular, quadrangular, pentagonal and so on, or also of another type, so as to activate according to the position assumed by the at least one container 14 on the base 12.

In all cases, the disposition of the heating elements 22 can be coplanar, or performed at different depths, depending on the type of heating to be obtained.

Thanks to these dispositions of the heating elements 22, it is possible to direct heat energy in a circumstantial and point-by-point manner only to the zones of the container 14 to be heated, whether it is only part of the container 14 or all of it.

According to possible variant embodiments, the activation of the heating elements 22 can also depend on the position assumed by the food inside the container 14.

The first heating unit 16a comprises sensitive elements 28 configured to detect the position and bulk of the container/containers 14.

The disposition of the sensitive elements 28 is such as to allow to recognize the size and/or position and/or shape of the at least one container 14 used.

The apparatus for cooking food 10 can comprise mixing elements, such as a blade 30, of the removable type, selectively associable with the at least one container 14.

A drive member M2 is associated with the blade 30, suitable to make it selectively rotate.

According to variant embodiments, the blade 30 can be the type suitable to mix the food contained in the container 14.

According to other variant embodiments, the blade 30 can be the type suitable to reduce the food contained in the container 14 to pieces, for example to shred and/or mince it.

The blade 30 can be commensurate with the shape and size of the container 14 used, cooperating with it as a function of the effect to be obtained on the food.

The drive member M2 can make the blade 30 rotate at different speeds and/or in different directions, depending on the effect to be obtained on the food.

The apparatus for cooking food 10 comprises at least a control and command unit 20 configured to collaborate at least with the first heating unit 16a.

The first heating unit 16a cooperates with the control and command unit 20 to selectively switch on/off and/or regulate the heating elements 22.

In addition, the control and command unit 20 is associated with the sensitive elements 28. The association allows the control and command unit 20 to recognize which heating elements 22 are activated/can be activated in order to heat the container/containers 14 directly.

Furthermore, the control and command unit 20 can also collaborate with the second heating unit 16b to selectively switch on/off and/or regulate the heating elements 22.

According to variant embodiments, the control and command unit 20 can be configured to drive the drive member M1 and activate the ventilation means 32.

According to other variant embodiments, the control and command unit 20 can be configured to drive the drive member M2 so as to make the blade 30 rotate at a desired speed.

The control and command unit 20 can be configured to set possible cooking variables, such as for example intensity, time and method.

For example, the control and command unit 20 can be used to set particular heating gradients of the heating elements 22, to time the activation and deactivation of the heating elements 22 and perform a control function if the temperature of the at least one container 14, or its content, exceeds a determinate value.

Furthermore, the control and command unit 20 can comprise at least a display or screen 26 and a keypad 24.

The screen 26 can be configured to display and/or set the typical parameters that are useful during cooking and/or heating food, such as for example the temperature in the cooking zone, the weight of the food, cooking times, the power supplied to the heating unit 16a, 16b, it can display cooking modes, such as grill function or browning function, etc.

To this end, the keypad 24 is configured to set the desired values of these parameters.

According to variant embodiments, the screen 26 can be configured to display a map showing the spatial location of the heating elements 22 on the base 12.

The screen 26 can be configured to show which heating elements 22 are active and which are not.

Furthermore, the screen 26 can be configured to display the location and/or bulk of the at least one container 14 when it is resting on the base 12.

By means of the control and command unit 20 it is possible to selectively decide which heating elements 22 to activate/de-activate.

Moreover, the control and command unit 20 can be configured to split the heat energy produced by the heating elements 22.

It is clear that modifications and/or additions of parts may be made to the apparatus for cooking food 10 and corresponding cooking method as described heretofore, without departing from the field and scope of the present invention.

It is also clear that, although the present invention has been described with reference to some specific examples, a person of skill in the art shall certainly be able to achieve many other equivalent forms of apparatus for cooking food 10 and corresponding cooking method, having the characteristics as set forth in the claims and hence all coming within the field of protection defined thereby.

## Claims

1. Apparatus for cooking food comprising a lid (18) and at least a base (12) defining the lower structure of said apparatus, at least a first heating unit (16a) associated with said base (12) and a second heating unit (16b) associated with said lid (18), at least one container (14) being selectively associable with said base (12), said container (14) being removable from the base (12) and suitable to contain food, **characterized in that** said first heating unit (16a) comprises a plurality of electric heating elements (22) configured to achieve a specific heating surface to heat said at least one container (14) and selectively activatable depending on the sizes and/or position of the at least one container (14) on said base (12), wherein said first heating unit (16a) comprises sensitive elements (28) configured to recognize the position and/or the size and/or the shape of said at least one container (14), and **in that** said first heating unit (16a) comprises at least one control and command unit (20) associated at least with said heating elements (22) and to said sensitive elements (28) and configured to selectively command said heating elements (22) on the basis of the recognition by said sensitive elements (28) of which heating elements (22) are activated or can be activated in order to heat said container (14) directly; and **in that** said lid (18) comprises ventilation means (32) selectively made to function by a drive member (M1) and cooperating with said second heating unit (16b).

2. Apparatus for cooking food as in claim 1, **characterized in that** said first heating unit (16a) is configured to activate and achieve a heating surface smaller than or equal to the corresponding base surface of the at least one container (14).

3. Apparatus for cooking food as in any claim hereinbefore, **characterized in that** said heating elements (22) are disposed in a concentric manner.

4. Apparatus for cooking food as in any claim hereinbefore, **characterized in that** said heating elements (22) are disposed in a matrix structure.

5. Apparatus for cooking food as in any claim hereinbefore, **characterized in that** said heating elements (22) are electric resistances and/or elements of the inductive type and/or elements of the halogen type.

6. Apparatus for cooking food as in any claim hereinbefore, **characterized in that** said control and command unit (20) comprises at least a screen (26) and at least a keypad (24).

7. Apparatus for cooking food as in claim 6, **characterized in that** said screen (26) is configured to at least display the position of said heating elements (22) and said keypad (24) in order to choose which heating element (22) to activate/de-activate.

8. Method for cooking food, **characterized in that** it comprises:
- positioning at least one container (14) and a corresponding rotatable tool on a base (12) with which a first heating unit (16a) is associated, comprising a plurality of heating elements (22), and associating with the container (14) a lid (18) comprising a second heating unit (16b) and ventilation means (32) selectively made to function by a drive member (M1) and cooperating with said second heating unit (16b);
- detecting the position and/or the bulk size and/or the shape of said at least one container (14) by means of sensitive elements (28) comprised in said first heating unit (16a);
- activating some or all of said heating elements (22) which collaborate in the direct heating of said at least one container (14).

## Patentansprüche

1. Vorrichtung zum Kochen von Lebensmitteln, umfassend einen Deckel (18) und mindestens eine Basis (12), welche die untere Struktur der Vorrichtung definiert, mindestens eine mit der Basis (12) verbundene erste Heizeinheit (16a) und eine mit dem Deckel (18) verbundene zweite Heizeinheit (16b), mindestens einen Behälter (14), der mit der Basis (12) selektiv verbunden werden kann, wobei der Behälter (14) von der Basis (12) abnehmbar und zur Aufnahme von Lebensmitteln geeignet ist, **dadurch gekennzeichnet, dass** die erste Heizeinheit (16a) eine Vielzahl an elektrischen Heizelementen (22) umfasst, die so konfiguriert sind, dass sie eine spezifische Heizfläche erreichen, um den mindestens einen Behälter (14) zu erwärmen, und in Abhängigkeit von den Abmessungen und/oder der Position des mindestens einen Behälters (14) auf der Basis (12) selektiv aktivierbar sind, wobei die erste Heizeinheit (16a) empfindliche Elemente (28) umfasst, die so konfiguriert sind, dass sie die Position und/oder die Größe und/oder die Form des mindestens einen Behälters (14) erkennen, und **dass** die erste Heizeinheit (16a) mindestens eine Steuer- und Befehlseinheit (20) umfasst, die zumindest mit den Heizelementen (22) und mit den empfindlichen Elementen (28) verbunden ist und so konfiguriert ist, dass sie die Heizelemente (22) auf Grundlage der Erkennung durch die empfindlichen Elemente (28), deren Heizelemente (22) aktiviert werden oder aktiviert werden können, selektiv kontrolliert, um den Behälter (14) direkt zu erwärmen; und dass der Deckel (18) Belüftungsmittel (32) umfasst, die selektiv so ausgebildet sind, dass sie durch ein Antriebsmittel (M1) betätigt werden und mit der zweiten Heizeinheit (16b) kooperieren.

2. Vorrichtung zum Kochen von Lebensmitteln gemäß Anspruch 1, **dadurch gekennzeichnet, dass** die erste Heizeinheit (16a) so konfiguriert ist, dass sie eine Heizfläche aktiviert und erreicht, die kleiner ist als die entsprechende Bodenfläche des mindestens eines Behälters (14) oder dieser entspricht.

3. Vorrichtung zum Kochen von Lebensmitteln gemäß irgendeinem vorhergehenden Anspruch, **dadurch gekennzeichnet, dass** die Heizelemente (22) konzentrisch angeordnet sind.

4. Vorrichtung zum Kochen von Lebensmitteln gemäß irgendeinem vorhergehenden Anspruch, **dadurch gekennzeichnet, dass** die Heizelemente (22) in einer Matrixstruktur angeordnet sind.

5. Vorrichtung zum Kochen von Lebensmitteln gemäß irgendeinem vorhergehenden Anspruch, **dadurch gekennzeichnet, dass** die Heizelemente (22) elektrische Widerstände und/oder induktive Elemente und/oder Halogen-Elemente sind.

6. Vorrichtung zum Kochen von Lebensmitteln gemäß irgendeinem vorhergehenden Anspruch, **dadurch gekennzeichnet, dass** die Steuer- und Befehlseinheit (20) mindestens einen Bildschirm (26) und mindestens ein Tastenfeld (24) umfasst.

7. Vorrichtung zum Kochen von Lebensmitteln gemäß Anspruch 6, **dadurch gekennzeichnet, dass** der Bildschirm (26) so konfiguriert ist, dass er zumindest die Position der Heizelemente (22) und das Tastenfeld (24) darstellt, um eine Auswahl zu treffen, welche Heizelemente (22) zu aktivieren/deaktivieren sind.

8. Verfahren zum Kochen von Lebensmitteln, **dadurch gekennzeichnet, dass** es umfasst:
- Positionieren mindestens eines Behälters (14) und eines entsprechenden rotierbaren Hilfsmittels auf einer Basis (12), mit der eine erste Heizeinheit (16a) verbunden ist, welche eine Vielzahl an Heizelementen (22) umfasst, und Verbinden eines Deckels (18) mit dem Behälter (14), wobei der Deckel (18) eine zweite Heizeinheit (16b) und Belüftungsmittel (32) umfasst, die selektiv so ausgebildet sind, dass sie durch ein Antriebsmittel (M1) betätigt werden und mit der zweiten Heizeinheit (16b) kooperieren;
- Detektieren der Position und/oder der Masse und/oder der Form des mindestens einen Behälters (14) durch in der ersten Heizeinheit (16a) enthaltene empfindliche Elemente (28);
- Aktivieren einiger oder aller Heizelemente (22), die bei der direkten Erwärmung des mindestens einen Behälters (14) zusammenwirken.

## Revendications

1. Appareil de cuisson d'aliments comprenant un couvercle (18) et au moins une base (12) formant la structure inférieure dudit appareil, au moins une première unité de chauffage (16a) associée avec ladite base (12) et une deuxième unité de chauffage (16b) associée avec ledit couvercle (18), au moins un conteneur (14) étant sélectivement associable avec ladite base (12), ledit conteneur (14) étant retirable de la base (12) et apte à contenir de la nourriture, **caractérisé en ce que** ladite première unité (16a) comprend une pluralité d'éléments de chauffage électriques (22) configurés pour former une surface de chauffage spécifique pour chauffer ledit ou lesdits conteneur(s) (14) et pouvant être activés de manière sélective en fonction des tailles et/ou de la position dudit ou desdits conteneur(s) (14) sur ladite base (12), dans lequel ladite première unité de chauffage (16a) comprend des éléments sensibles (28) configurés pour reconnaître la position et/ou la taille et/ou la forme dudit ou desdits conteneur(s) (14), et **en ce que** ladite première unité de chauffage (16a) comprend au moins une unité de contrôle et de commande (20) associée au moins avec lesdits éléments de chauffage (22) et lesdits éléments sensibles (28) et configurée pour commander sélectivement lesdits éléments de chauffage (22) sur la base de la reconnaissance par lesdits éléments sensibles (28) des éléments de chauffage (22) qui sont activés ou peuvent être activés afin de chauffer directement ledit conteneur (14) ; et **en ce que** ledit couvercle (18) comprend des moyens de ventilation (32) mis sélectivement en fonctionnement par un organe de commande (M1) et coopérant avec ladite deuxième unité de chauffage (16b).

2. Appareil de cuisson d'aliments selon la revendication 1, **caractérisé en ce que** ladite première unité de chauffage (16a) est configurée pour activer et former une surface de chauffage inférieure ou égale à la surface de base correspondant au(x)dit(x) conteneur(s) (14).

3. Appareil de cuisson d'aliments selon l'une quelconque des revendications précédentes, **caractérisé en ce que** lesdits éléments de chauffage (22) sont disposés de manière concentrique.

4. Appareil de cuisson d'aliments selon l'une quelconque des revendications précédentes, **caractérisé en ce que** lesdits éléments de chauffage (22) sont disposés dans une structure formant une matrice.

5. Appareil de cuisson d'aliments selon l'une quelconque des revendications précédentes, **caractérisé en ce que** lesdits éléments de chauffage (22) sont des résistances électriques et/ou des éléments du type inductif et/ou des éléments du type halogène.

6. Appareil de cuisson d'alimentes selon l'une quelconque des revendications précédentes, **caractérisé en ce que** ladite unité de contrôle et de commande (20) comprend au moins un écran (26) et au moins un clavier (24).

7. Appareil de cuisson d'aliments selon la revendication 6, **caractérisé en ce que** ledit écran (26) est configuré au moins pour afficher la position desdits éléments de chauffage (22) et dudit clavier (24) afin de choisir quel élément de chauffage (22) activer/désactiver.

8. Procédé de cuisson d'aliments, **caractérisé en ce qu'**il comprend les étapes consistant à :
- positionner au moins un conteneur (14) et un outil tournant correspondant sur une base (12) avec laquelle une première unité de chauffage (16a) est associée, comprenant une pluralité d'éléments de chauffage (22), et associer avec le conteneur (14) un couvercle (18) comprenant une deuxième unité de chauffage (16b) et des moyens de ventilation (32) mis sélectivement en fonctionnement par un organe de commande (M1) et coopérant avec ladite deuxième unité de chauffage (16b) ;
- détecter la position et/ou la taille globale et/ou la forme dudit ou desdits conteneur(s) (14) au moyen d'éléments sensibles (28) compris dans ladite première unité de chauffage (16a) ;
- activer certains desdits ou tous lesdits éléments de chauffage (22) qui participent au chauffage direct dudit ou desdits conteneur(s) (14).
